# EUROPEAN PATENT APPLICATION

(11) **EP 3 761 264 A1**
(43) Date of publication of application: **06.01.2021**
(21) Application number: 18907801.7
(22) Date of filing: 31.07.2018
(51) Int. Cl.: G06T 7/00

(54) **IMAGE DATA GENERATION DEVICE, IMAGE RECOGNITION DEVICE, IMAGE DATA GENERATION PROGRAM, AND IMAGE RECOGNITION PROGRAM**

(30) Priority: 28.02.2018 JP 2018035745
(71) Applicant: Equos Research Co., Ltd., Tokyo 101-0021 (JP); Kyushu Institute of Technology, Kitakyushu-shi Fukuoka 804-8550 (JP)
(72) Inventor: YAMADA Hideo, Tokyo 101-0021 (JP); MURAMATSU Ryuya, Tokyo 101-0021 (JP); SHIBATA Masatoshi, Tokyo 101-0021 (JP); ENOKIDA Shuichi, Iizuka-shi, Fukuoka 820-8502 (JP); KAI Yuto, Iizuka-shi, Fukuoka 820-8502 (JP)
(74) Representative: TBK
(86) International application number: PCT/JP2018/028607
(87) International publication number: WO 2019/167303

(57) **Abstract**

A spatio-temporal image recognition device 1 includes spatio-temporal image data generation units 2a, 2b, and 2c for converting moving-image data 4 which continuously holds spatial information and temporal information to spatio-temporal image data, and they scan the moving-image data 4 on scanning paths different from each other. The spatio-temporal image data generation units 2a, 2b, and 2c generate spatio-temporal image data 8a, 8b, and 8c scanned on the scanning paths different from each other and output them to an image recognition unit 3. The image recognition unit 3 generates two-dimensional feature maps 60a, 60b, and 60c by individual convolution process of the spatio-temporal image data 8a, 8b, and 8c and then, integrates them, analyzes them by a neural network, and outputs an image recognition result.

## Description

### TECHNICAL FIELD

The present invention relates to an image data generation device, an image recognition device, an image data generation program, and an image recognition program, and relates to recognition of various images, such as pedestrians, using CNN, for example.

### BACKGROUND ART

In recent years, the deep learning using artificial intelligence has been actively studied, and great results have been reported in a field of image recognition of two-dimensional images using CNN.

Since moving images are images in which frame images which are two-dimensional images are arranged in time series, there is an increasing demand for applying deep learning technologies with respect to two-dimensional images to moving images.

Non-Patent Literature 1 "3D Convolutional Neural Networks for Human Action Recognition" and Non-Patent Literature 2 "Scene Recognition by CNN using Frame Connected Images" have technologies for recognizing moving images using such a two-dimensional image recognition technology.

The technology of Non-Patent Literature 1 is a technology for executing a convolution process by applying a convolution filter composed of two dimensions for space and one dimension for time to moving-image data.

The technology of Non-Patent Literature 2 is a technology for representing a temporal change of an object with one piece of two-dimensional image by arranging and connecting a series of frame images obtained by capturing a movement (utterance scene) of the target in a tile shape. This is supplied to an image recognition device by CNN to recognize a scene.

However, since the technology of Non-Patent Literature 1 repeatedly uses a three-dimensional convolution filter for moving-image data, there has been a problem that a calculation cost increases, and a large-scale calculating machine is required.

Since the technology described in Non-Patent Literature 2 uses a two-dimensional convolution filter, a calculation cost could be reduced, but there is no relevance of information between pixels of images adjacent in a tile shape, and therefore there has been a problem that recognition accuracy of an object is reduced.

### CITATION LIST

### NON-PATENT LITERATURE

Non-Patent Literature 1: IEEE Transactions on Pattern Analysis and Machine Intelligence, Vol.35, pp.221-231, 2013, "3D Convolutional Neural Networks for Human Action Recognition"

Non-Patent Literature 2: MIRU2016 - The 19th Meeting on Image Recognition and Understanding, PS1-27, "Scene Recognition by CNN using Frame Connected Images"

### DISCLOSURE OF INVENTION

### PROBLEM TO BE SOLVED BY THE INVENTION

The object of the present invention is to image-recognize a dynamic recognition object.

### SUMMARY OF THE INVENTION(S)

(1) The invention described in claim 1 provides an image data generation device comprising: a time series spatial information acquiring means for acquiring time series spatial information in which a position of a recognition object in space is recorded in accordance with a lapse of time; a data value acquiring means for scanning the acquired time series spatial information on different scanning paths in a predetermined direction a plurality of number of times to acquire a column of data values for each of the scanning paths in the aforementioned predetermined direction; an image data generation means for generating image data for each of the scanning paths in which the acquired column of the data values is arranged correspondingly to the other direction of the time series spatial information; and an output means for outputting the generated image data.
(2) The invention described in claim 2 provides the image data generation device according to claim 1, wherein the predetermined direction is a spatial direction of the time series spatial information, and the other direction is a temporal direction of the time series spatial information.
(3) The invention described in claim 3 provides the image data generation device according to claim 1 or 2, wherein the data value acquiring means, the image data generation means, and the output means are provided for each of the different scanning paths, and these means execute the time series spatial information for each of the different scanning paths in parallel processing.
(4) The invention described in claim 4 provides the image data generation device according to claim 1 or 2, wherein the data value acquiring means, the image data generation means, and the output means execute each of the different scanning paths in sequential processing.
(5) The invention described in claim 5 provides an image recognition device comprising: an image data acquiring means for acquiring a plurality of image data with different scanning paths from the image data generation device according to any one of claims 1 to 4; a feature amount acquiring means for individually acquiring a feature amount of a recognition object from the acquired plurality of image data; and an integration means for integrating the acquired individual feature amounts and outputting a recognition result of the recognition object.
(6) The invention described in claim 6 provides the image recognition device according to claim 5, wherein the feature amount acquiring means acquires the feature amounts by convolution process; and the integration means integrates the feature amounts by using a neural network.
(7) The invention described in claim 7 provides an image data generation program for causing a computer to realize; a time series spatial information acquiring function for acquiring time series spatial information in which a position of a recognition object in space is recorded in accordance with a lapse of time; a data value acquiring function for scanning the acquired time series spatial information on different scanning paths in a predetermined direction a plurality of number of times to acquire a column of data values for each of the scanning paths in the aforementioned predetermined direction; an image data generation function for generating image data for each of the scanning paths in which the acquired column of the data values is arranged correspondingly to the other direction of the time series spatial information; and an output function for outputting the generated image data.
(8) The invention described in claim 8 provides an image recognition program for causing a computer to realize: an image data acquiring function for acquiring a plurality of image data with different scanning paths from the image data generation device according to any one of claims 1 to 4; a feature amount acquiring function for individually acquiring a feature amount of a recognition object from the acquired plurality of image data; and an integration function for integrating the acquired individual feature amounts and outputting a recognition result of the recognition object.

### EFFECT OF THE INVENTION(S)

According to the present invention, a dynamic recognition object can be image-recognized by generating spatio-temporal image data both having spatial information and temporal information.

### BRIEF DESCRIPTION OF DRAWINGS

FIG. 1 is a diagram for describing a configuration of a spatio-temporal image recognition device.
FIGS. 2 are diagrams for describing a configuration of a spatio-temporal image data.
FIGS. 3 are diagrams for describing a Hilbert scan.
FIGS. 4 are diagrams for describing a scanning path of the Hilbert scan.
FIGS. 5 are diagrams or describing a modified example of a scanning path of the Hilbert scan.
FIG. 6 is a diagram for describing a configuration of CNN.
FIGS 7 are diagrams for describing an image recognition unit.
FIG. 8 is a diagram illustrating an example of a hardware configuration of the spatio-temporal image recognition device.
FIG. 9 is a flow chart for describing a procedure of a spatio-temporal image data generation process.
FIG. 10 is a flow chart for describing a procedure of an image recognition process.
FIG. 11 is a diagram for describing a modified example.

### BEST MODE(S) FOR CARRYING OUT THE INVENTION

### (1) Outline of Embodiment

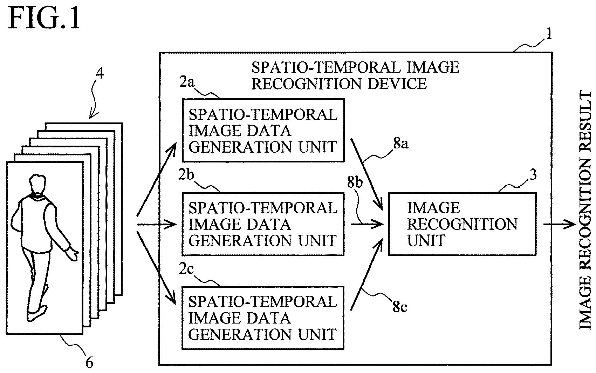

A spatio-temporal image recognition device 1 (FIG. 1) includes spatio-temporal image data generation units 2a, 2b, and 2c for converting moving-image data 4 which continuously holds spatial information and temporal information to spatio-temporal image data which is two-dimensional image data, and they scan the moving-image data 4 on scanning paths different from each other with respect to one piece of frame image data 6.

As a result, the spatio-temporal image data generation units 2a, 2b, and 2c generate a spatio-temporal image data 8a, 8b, and 8c scanned on the scanning paths different from each other and output them to an image recognition unit 3.

The image recognition unit 3 generates two-dimensional feature maps 60a, 60b, and 60c (which will be described later) by individual convolution process of the spatio-temporal image data 8a, 8b, and 8c and then, integrates them, analyzes them by a neural network, and outputs an image recognition result.

Thus, the spatio-temporal image recognition device 1 is capable of image recognition using moving images by means of two-dimensional CNN (Convolutional Neural Network) with a plurality of pieces of the spatio-temporal image data 8a, 8b, and 8c generated by the different scanning paths as inputs.

### (2) Details of Embodiment

FIG. 1 is a diagram for describing a configuration of a spatio-temporal image recognition device 1 according to the embodiment.

The spatio-temporal image recognition device 1 is mounted on a vehicle, for example, analyzes moving-image data 4 output from an in-vehicle camera and image-recognizes presence or absence of a pedestrian outside the vehicle and classification of an operating state (right upright, right walking, left upright, left walking, and the like).

The spatio-temporal image recognition device 1 includes a spatio-temporal image data generation units 2a, 2b, and 2c and an image recognition unit 3 for executing parallel processing of the moving-image data 4.

Hereinafter, when the spatio-temporal image data generation units 2a, 2b, and 2c are not particularly distinguished, it is simply described as the spatio-temporal image data generation unit 2, and the same applies to the other components described here.

The spatio-temporal image data generation unit 2 is an image data generation device for converting the moving-image data 4 which is three-dimensional information (two dimensions for a spatial direction, one dimension for a temporal direction, totaling in three dimensions) which recorded temporal changes of a spatial state of a recognition object to two-dimensional image data by arranging it in the temporal direction through one-dimensional development in a spatial direction as will be described later.

Since this two-dimensional image data represents spatial and temporal information, it was named by the inventors of this application as spatio-temporal image data.

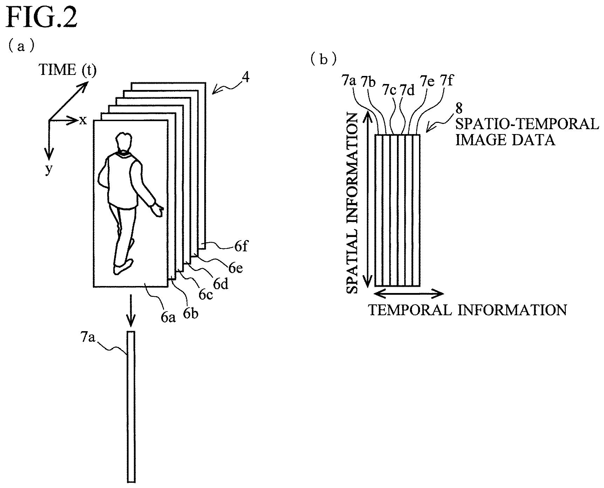

Since the spatio-temporal image data 8 (see FIGS. 2) is the two-dimensional image data, an image recognition technology of the two-dimensional image data can be applied to the moving-image data 4 which recorded the spatial information and the temporal information. Thus, a calculation cost can be drastically reduced as compared with the prior art using the three-dimensional filter to the moving-image data 4.

The spatio-temporal image data generation unit 2 develops two-dimensional spatial information to one-dimensional data by scanning still image data configuring a frame of the moving-image data 4 on a predetermined scanning path, and the spatio-temporal image data generation units 2a, 2b, and 2c scan the still image data on the scanning paths different from each other, whereby three types of the spatio-temporal image data 8 is generated.

In this embodiment, the spatio-temporal image data generation units 2a, 2b, and 2c are assumed to execute a Hilbert scan (which will be described later) with different scanning paths.

Different scanning methods may be combined such that the spatio-temporal image data generation units 2a and 2b execute the Hilbert scan, while the spatio-temporal image data generation unit 2c executes raster scan.

In this embodiment, three types of the spatio-temporal image data 8 are combined, but this is only an example, and two types of the spatio-temporal image data 8 may be combined or further more types of the spatio-temporal image data 8 may be combined.

The image recognition unit 3 individually extracts a feature amount from the spatio-temporal image data 8 generated by the spatio-temporal image data generation units 2a, 2b, and 2c and then, integrates them, executes image-recognition and outputs an image recognition result.

In this embodiment, CNN (Convolutional Neural Network) is used as an example for these processes. The CNN is an algorithm for executing an image recognition process by artificial intelligence using deep learning and is called convolutional neural network. The CNN has obtained high evaluation as an image recognition method of the two-dimensional image data and is widely used.

The ordinary CNN is configured to process one piece of image data but the image recognition unit 3 is configured to image-recognize three pieces of the spatio-temporal image data 8 by an integral process.

FIGS. 2 are diagrams for describing a configuration of the spatio-temporal image data 8.

As illustrated in FIG. 2(a), the moving-image data 4 captured by a camera is composed of frame image data 6a, 6b, ... which are generated in time series.

The frame image data 6 is two-dimensional still image data having a component (x, y) in the spatial direction by capturing a subject (recognition object) in a certain moment.

The moving-image data 4 is a set of still image data in which the frame image data 6 is arranged in the temporal direction (considered as t-axis) systematically in time series in accordance with a capturing time, and corresponds to three-dimensional data obtained by totalizing two dimensions in the spatial direction and a one dimension in the temporal direction.

The moving-image data 4 functions as time series spatial information in which a position of the recognition object in space is recorded in accordance with a lapse of time.

The spatio-temporal image data generation unit 2 reads a predetermined number of the frame image data 6 sequentially transmitted from a camera in time series.

The spatio-temporal image data generation unit 2 includes a time series spatial information acquiring means for acquiring the time series spatial information from the camera.

As an example, six frames of the frame image data 6 from a first frame image data 6a to the latest frame image data 6f are read.

The frame image data 6 may be read every predetermined number or at random, or frame dropping may occur, as long as image recognition accuracy is kept within an allowable range.

The order of reading the frame image data 6 can be reversed.

The spatio-temporal image data generation unit 2 may read the predetermined number of the frame image data 6 from the latest data to the past data in time series, among the frame image data 6 sequentially transmitted from the camera. As an example of this case, six frames of the frame image data 6 from the latest frame image data 6f to the past frame image data 6a will be read.

When the spatio-temporal image data generation unit 2 reads the frame image data 6, the spatio-temporal image data generation unit 2, first, unicursally sets a Hilbert curve (below-mentioned) with respect to the frame image data 6a in the spatial direction (plane direction of a plane stretched by an x-axis and a y-axis). Then, the spatio-temporal image data generation unit 2 scans and reads pixel values of pixels of the frame image data 6a along the aforementioned Hilbert curve, and develops them in one column of data values. This processing is called a Hilbert scan and details thereof will be described later.

One-dimensional spatial image data 7a which are one-dimensional data in the spatial direction including spatial information, at the time when the frame image data 6a is captured, is acquired by executing the Hilbert scan of the frame image data 6a.

Similarly, the spatio-temporal image data generation unit 2 also converts the frame image data 6b to 6f into one-dimensional spatial image data 7b to 7f (not illustrated).

As will be described later, since the Hilbert curve is bent, when it is scanned along this Hilbert curve, the two-dimensional image can be converted into one-dimensional image, while holding locality of the image as much as possible.

Subsequently, as illustrated in FIG. 1(b), the spatio-temporal image data generation unit 2 arranges the one-dimensional spatial image data 7a to 7f in time series in the temporal direction (i.e., in order of the capturing times) to generate a spatio-temporal image data 8 for image recognition.

The spatio-temporal image data 8 is two-dimensional image data in which a direction of one side represents spatial information (spatial component) and the other side orthogonal thereto represents temporal information (temporal component) .

Thus, the spatio-temporal image data generation unit 2 converts the moving-image data 4 which is three-dimensional time series spatial data into spatio-temporal image data 8 which is two-dimensional image data by developing the moving-image data 4 by executing the Hilbert scan thereon in the spatial direction, while holding the spatial information and the temporal information.

Note that the arrangement of the one-dimensional spatial image data 7 is set as the time series order, but the order may be changed as long as image recognition is possible.

The procedure that the spatio-temporal image data generation unit 2 generates the spatio-temporal image data 8 has been described above. Since the spatio-temporal image recognition device 1 includes three spatio-temporal image data generation units 2a, 2b, and 2c with different scanning paths, it generates the one-dimensional spatial image data 7 and the spatio-temporal image data 8 for each of the scanning paths from the moving-image data 4 and outputs them to the image recognition unit 3.

Thus, the spatio-temporal image recognition device 1 includes a data value acquiring means for scanning the time series spatial information a plurality of number of times (three times of scanning in this example) on different scanning paths in a predetermined direction (the spatial direction in this example) and acquiring a column of data values for each of the scanning paths in the predetermined direction, an image data generation means for generating the image data (the time series image data in this example) for each of the scanning paths in which the column of data values acquired by this is arranged correspondingly to the other direction (the temporal direction in this example) of the time series spatial information, and an output means for outputting the generated image data.

The spatio-temporal image data generation units 2a, 2b, and 2c are provided for each of the different scanning paths, and the data value acquiring means, the image data generation means, and the output means are provided for each of the different scanning paths for parallel processing of the moving-image data 4, and these means execute parallel processing of the time series spatial information for each of the different scanning paths.

Note that, in this embodiment, the moving-image data 4 is scanned in the spatial direction, and the one-dimensional data obtained as a result is arranged in the temporal direction, but this is only an example, and the moving-image data 4 may be scanned in the temporal direction and the one-dimensional data obtained as a result may be arranged in the spatial direction.

In this embodiment, the Hilbert scan is used as the scanning method, and this will be described hereafter.

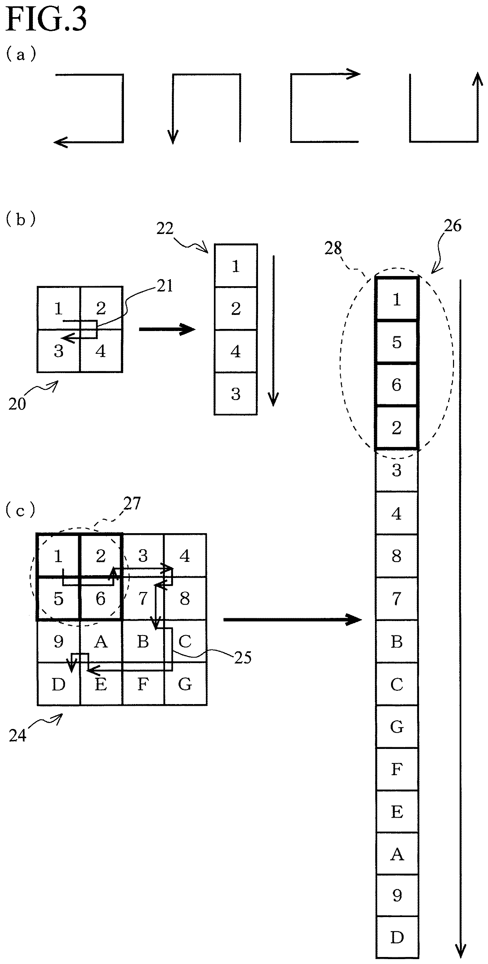

FIGS. 3 are diagrams for describing the Hilbert scan executed by the spatio-temporal image data generation unit 2.

The Hilbert scan is a process of reading pixel values unicursally over the entire frame image data 6 by setting the Hilbert curve which passes through each pixel to the frame image data 6 and scanning it along the Hilbert curve.

The Hilbert curve is a curve which covers the entire space formed by combining U-shaped curves as illustrated in FIG. 3(a) and is a kind of curve called a space-filling curve. In addition to this curve, there are the Peano curve and the like in the space filling curve. The arrow line illustrated in the diagram illustrates a scanning direction.

Thus, the spatio-temporal image data generation unit 2 sets the space-filling curve as a curve which repeats bending.

In an example of image data 20 in which m x m (m=2) pixel 1 to pixel 4 are arranged as illustrated in FIG. 3(b), when the Hilbert curve 21 which passes through these pixels is set, and the pixel values read by scanning the pixel value in the direction of the arrow line are arranged in one column, one-dimensional spatial image data 22 in which pixel 1 to pixel 4 are arranged in order is acquired.

In an example of image data 24 in which m x m (m=4) pixel 1 to pixel G are arranged as illustrated in FIG. 3(c), when the Hilbert curve 25 which passes through these pixels is set, and the pixel values read by scanning the pixel value in the direction of the arrow line are arranged in one column, one-dimensional spatial image data 26 in which pixel 1 to pixel G are arranged in order is acquired.

Further, image data with more pixels are similarly scanned in accordance with the Hilbert curve.

For example, in the image data 24 illustrated in FIG. 3(c), although the pixels 1, 2, 5, and 6 are localized in a region 27, these pixels are also localized in a region 28 in the one-dimensional spatial image data 26.

Similarly, the pixels 3, 4, 7, and 8 localized in the image data 24 are also localized in one-dimensional spatial image data 26 so as to be collected.

Thus, when the Hilbert scan is used, two-dimensional data can be converted into one-dimensional data, while holding locality of pixel values as much as possible.

In image recognition, since pattern recognition of features of the image is performed, it is important to generate the spatio-temporal image data 8 so that local features of an original image is not degraded as much as possible.

Therefore, the Hilbert curve is a curve suitable as a scanning line for scanning the frame image data 6.

Note that the curve used for scanning the frame image data 6 is not limited to the Hilbert curve, and another space-filling curve, such as a Peano curve, or a non-space-filling curve may be used.

In this embodiment, the Hilbert curve is bent in a pixel unit, but is also possible to make the reading interval rough, for example, by bending every other pixel and reading every other pixel value. The smaller the interval is, the higher the accuracy becomes, but the calculation cost increases. Therefore, the reading interval may be determined in accordance with a degree of the locality required for the image recognition.

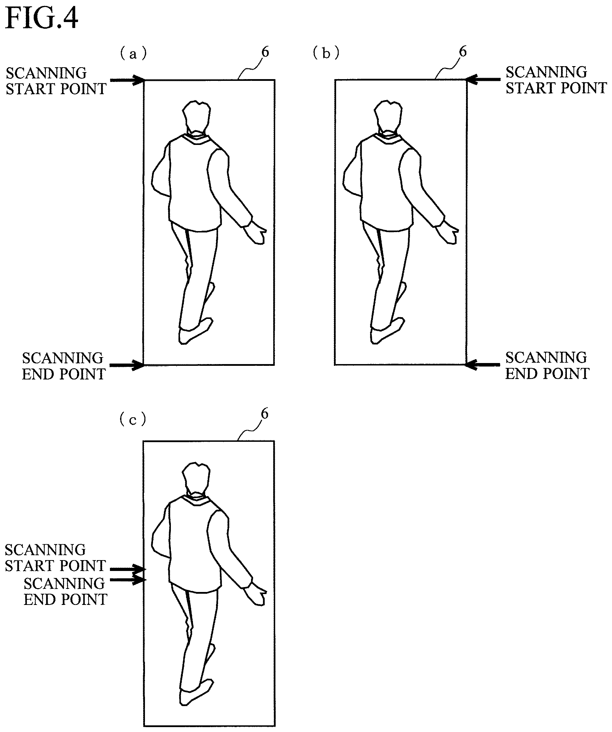

FIGS. 4 are diagrams for describing an example of the scanning path of the Hilbert scan executed by the spatio-temporal image data generation units 2a, 2b, and 2c.

In these FIGS. 4, the spatio-temporal image data generation units 2a, 2b, and 2c execute the Hilbert scan on the different scanning paths for the same frame image data 6, respectively.

Note that a side with a smaller x-coordinate as the left side, a side with a larger x-coordinate as the right side, a side with a smaller y-coordinate as the upper side, and a side with a larger y-coordinate as the lower side (they correspond to directions of left, right, upper and lower to the figures, respectively).

FIG. 4(a) illustrates a scanning start point and a scanning end point of the Hilbert scan executed by the spatio-temporal image data generation unit 2a.

The spatio-temporal image data generation unit 2a sets a left-end upper part and a left-end lower part of the frame image data 6 to the scanning start point and the scanning end point, respectively, and sets the scanning path (not illustrated) by the Hilbert curve so that all the pixels of the frame image data 6 are passed through.

FIG. 4(b) illustrates the scanning start point and the scanning end point of the Hilbert scan executed by the spatio-temporal image data generation unit 2b.

The spatio-temporal image data generation unit 2b sets a right-end upper part and a right-end lower part of the frame image data 6 to the scanning start point and the scanning end point, respectively, and sets the scanning path (not illustrated) by the Hilbert curve so that all the pixels of the frame image data 6 are passed through.

FIG. 4(c) illustrates the scanning start point and the scanning end point of the Hilbert scan executed by the spatio-temporal image data generation unit 2c.

The spatio-temporal image data generation unit 2c sets the scanning start point and the scanning end point by shifting them only by one portion of the pixel at the left-end center part of the frame image data 6 and sets the scanning path (not illustrated) by the Hilbert curve so that all the pixels of the frame image data 6 are passed through.

Since the spatio-temporal image data generation units 2a, 2b, and 2c set different points to the scanning start point and the scanning end point so as to set the Hilbert curve, the scanning paths are different from each other.

As a result, the spatio-temporal image data generation units 2a, 2b, and 2c can generate the spatio-temporal image data 8 with the scanning paths different from each other.

The scanning start points and the scanning end points above are one example and they can be set at arbitrary points.

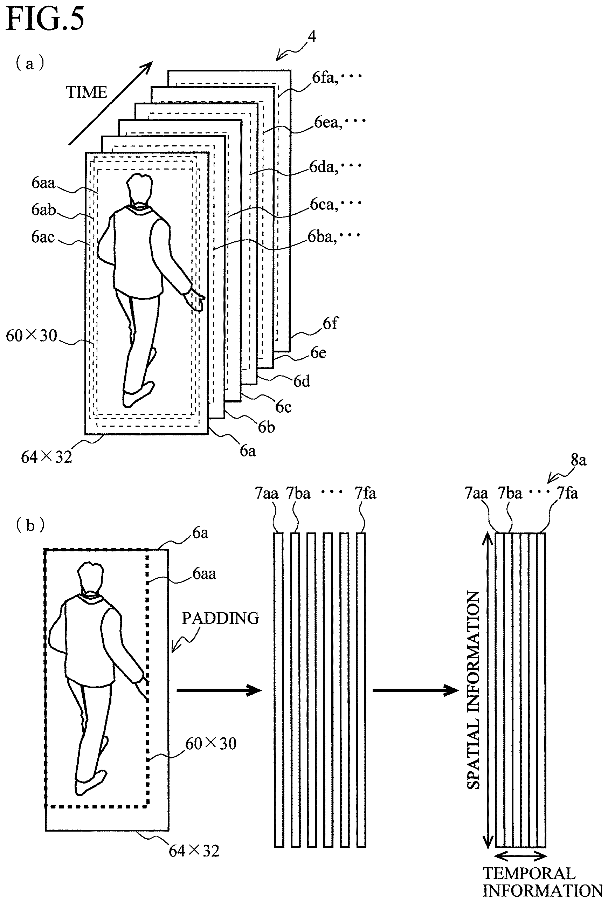

FIGS. 5 are diagrams for describing a modified example of the scanning path of the Hilbert scan executed by the spatio-temporal image data generation units 2a, 2b, and 2c.

In the embodiment described in FIGS. 4, the case in which the Hilbert scan is executed on different scanning paths for the same frame image data 6 was described. On the other hand, in the modified example, a plurality of (three pieces in accordance with the embodiment) clipping images 6aa, 6ab, ... are clipped at random from one frame image data 6a, and the Hilbert scan is executed on the same scanning path for this clipping images 6aa, .... That is, even when the Hilbert scan is executed by setting the same scanning start point and scanning end point, scanning the clipping image in a different region is equal to changing the scanning path for the original frame image data 6a.

As illustrated in FIG. 5(a), the frame image data 6a is assumed to be composed of 64 x 32 pixels as an example. Meanwhile, the spatio-temporal image data generation unit 2 sets a region smaller than this size as the frame image data 6a at random (optionally) and extracts the clipping images 6aa, 6ab, ... formed in the region from the frame image data 6a. The sizes of the clipping images 6aa, ... are assumed to be 60 x 30 as an example.

Note that, when the Hilbert curve is set to the image, a size of one side needs to be n-th power of 2 (n is a natural number).

As illustrated in FIG. 5(b), the spatio-temporal image data generation unit 2 executes a process called padding for adding appropriate pixels for the surrounding of the clipping image 6aa to restore the size of the 64 x 32 clipping image 6aa.

Then, the spatio-temporal image data generation unit 2 scans the restored clipping image 6aa by setting the Hilbert curve to generate the one-dimensional spatial image data 7a, skipping the pixel values of the added pixels without being read into a memory.

The spatio-temporal image data generation unit 2 generates clipping images 6ba, 6bb, ..., to 6fa, 6fb, and 6fc by clipping frame image data 6b to 6f within an optional range, and after padding the generated data, the Hilbert scan is executed to generate one-dimensional spatial image data 7ba, 7bb, ..., to 7fa, 7fb, and 7fc.

Then, the spatio-temporal image data generation unit 2 arranges the one-dimensional spatial image data 7ba, 7bb, ..., to 7fa, 7fb, and 7fc in order of time series to generate spatio-temporal image data 8a, 8b ... 8f.

In the above-mentioned example, although the clipping image 6aa ... is set as an optional region for each frame image data 6, it may be set in accordance with a certain regularity.

By means of the above-mentioned procedure, the spatio-temporal image data generation units 2a, 2b, and 2c clip the frame image data 6a, respectively, at random and generate the clipping images 6aa, 6ab, and 6ac (not illustrated, the same applies to the following).

The clipping image generated by the j-th spatio-temporal image data generation unit 2j (2a, 2b, 2c) by padding after clipping the i-th frame image data 6i is represented as a clipping image 6ij. The one-dimensional spatial image data 7 is also indicated by using ij similarly.

The spatio-temporal image data generation units 2a, 2b, and 2c set the same scanning path to the clipping images 6aa, 6ab, and 6ac, respectively, and execute the Hilbert scan.

Though the scanning path is the same, the scanning range for the original frame image data 6 is different depending on the clipping and thus, the spatio-temporal image data generation units 2a, 2b, and 2c generate different one-dimensional spatial image data 7aa, 7ab, and 7ac.

The spatio-temporal image data generation units 2a, 2b, and 2c process the frame image data 6b to 6f similarly, whereby the spatio-temporal image data generation unit 2a generates the one-dimensional spatial image data 7ba to 7fa, the spatio-temporal image data generation unit 2b generates the one-dimensional spatial image data 7bb to 7fb, and the spatio-temporal image data generation unit 2c generates the one-dimensional spatial image data 7bc to 7fc.

The spatio-temporal image data generation unit 2a generates the spatio-temporal image data 8a from the one-dimensional spatial image data 7aa to 7fa, the spatio-temporal image data generation unit 2b generates the spatio-temporal image data 8b from the one-dimensional spatial image data 7ab to 7fb, and the spatio-temporal image data generation unit 2c generates the spatio-temporal image data 8c from the one-dimensional spatial image data 7ac to 7fc.

As described above, the spatio-temporal image data generation units 2a, 2b, and 2c can generate the spatio-temporal image data 8a, 8b, and 8c by the Hilbert scan on the different scanning paths.

The clipping processing of the frame image data 6 in general is used for reducing non-localization of localized information by the Hilbert scan as will be described below.

The Hilbert scan can generate the spatio-temporal image data 8 while holding locality of the pixel in the frame image data 6 as much as possible.

However, not all the locality is stored, but there are some cases where localized pixels are separated from each other.

By setting the Hilbert curve to the clipping image 6ij whose size has been restored after the clipping, a starting point of the Hilbert curve and a path passing through the pixels can be changed for each clipping image 6ij with respect to the original frame image 6i, and delocalization of the pixel can be distributed to various pixels.

Thus, the spatio-temporal image data generation unit 2 can change the curve setting conditions by changing the curve setting ranges for each frame image data also by clipping.

Such a process of clipping a slightly smaller image from the learning image or the frame image data 6 at random to comprehensively hold the spatial information is called data augmentation.

The data augmentation is applied to both the moving-image data 4 for pre-learning and the moving-image data 4.

As an example of the Hilbert scan by setting the different scanning path, the example in which the scanning start point and the scanning end point are changed as described in FIGS. 4 and the case of clipping described in FIGS. 5 are described, but both are preferably combined.

In this embodiment, the spatio-temporal image data generation units 2a, 2b, and 2c are assumed to individually clip the frame image data 6, respectively, at random and to set the different scanning start points and scanning end points, respectively.

A configuration of the CNN in general will be described as preparation for description of the CNN of the image recognition unit 3.

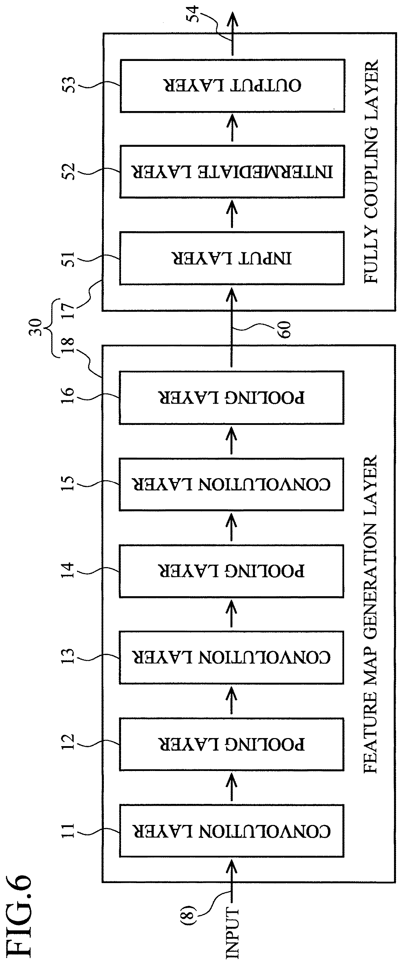

FIG. 6 conceptually illustrates the configuration of the CNN 30.

As illustrated in FIG. 6, the CNN 30 learns in advance various aspects which a pedestrian can take, such as right upright, right walking, left upright, left walking, ... as classification classes, for example. Then, the CNN 30 reads the two-dimensional image data, image-recognizes to which classification class the pedestrian's aspect belongs on the basis thereof by the following configuration and outputs a result thereof.

The CNN 30 is composed by combining a feature map generation layer 18 and a fully coupling layer 17.

The feature map generation layer 18 is composed by stacking a convolution layer 11, a pooling layer 12, a convolution layer 13, a pooling layer 14, a convolution layer 15, and a pooling layer 16 from an input side, and the fully coupling layer 17 is arranged on the downstream side thereof.

The convolution layer 11 is a layer which extracts a characteristic grayscale structure of an image by filtering the input two-dimensional image data (spatio-temporal image data 8 corresponds to the two-dimensional image data in this embodiment) by sliding a two-dimensional filter on the image; and executes a process corresponding to a frequency analysis.

The pooling layer 12 reduces the data by down-sampling the data while holding the features extracted by the convolution layer 11.

Since a pedestrian dynamically moves, a capturing position in the frame image data 6 deviates, but the deviation of the position of the spatial feature representing the pedestrian can be absorbed by means of the process of the pooling layer 12. Consequently, robustness of the image recognition accuracy with respect to the deviation of the spatial position can be improved.

The function of the convolution layers 13 and 15 is the same as that of the convolution layer 11. The function of the pooling layers 14 and 16 is the same as that of the pooling layer 12.

By means of the above-mentioned convolution process, the feature map generation layer 18 extracts a feature amount from the two-dimensional image data and generates a two-dimensional feature map 60 (data extracting the feature amount via the convolution layer 11 to the pooling layer 16).

The fully coupling layer 17 is a general neural network composed of an input layer 51, an intermediate layer 52, and an output layer 53 and is a layer for developing the two-dimensional feature map 60 in one dimension and executing a process such as regression analysis.

The output layer 53 includes output units for classification classes such as right upright, right walking, left upright, left walking, ... and the like and outputs an image recognition result 54 by % of each classification class such as right upright -> 5%, right walking -> 85%, left upright -> 2%, ... and the like, for example.

As described above, the image recognition unit 3 extracts the feature of the image and absorbs the deviation of the position three times, and then executes a regression analysis process, to recognize the image of the pedestrian's aspect.

Note that values of the two-dimensional filter of convolution layers 11, 13, and 15 and a parameter of the fully coupling layer 17 are tuned through learning.

The learning is performed by preparing a large number of the two-dimensional image data for each classification class, inputting the prepared data into the CNN 30, and backpropagating a result thereof.

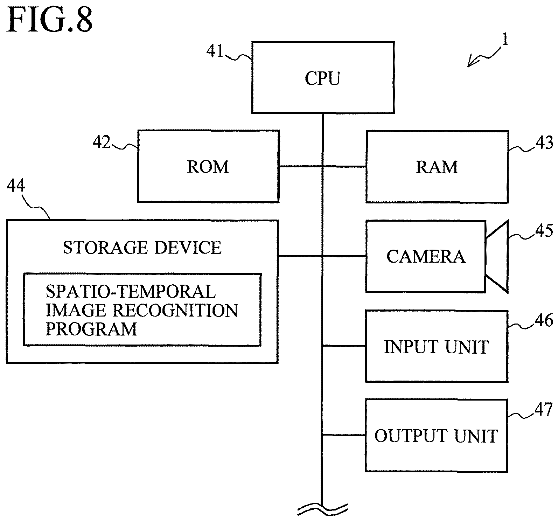

FIGS. 8 are diagrams for describing the image recognition unit 3.

The image recognition unit 3 expands the function of the CNN 30 so as to integrate the image recognition process using the spatio-temporal image data generation units 2a, 2b, and 2c and functions as the image recognition device.

In this embodiment, three types of integration methods, that is, a fully coupling method, a class score average method, and an SVM method are employed, and the respective image recognition accuracy was evaluated by experiments.

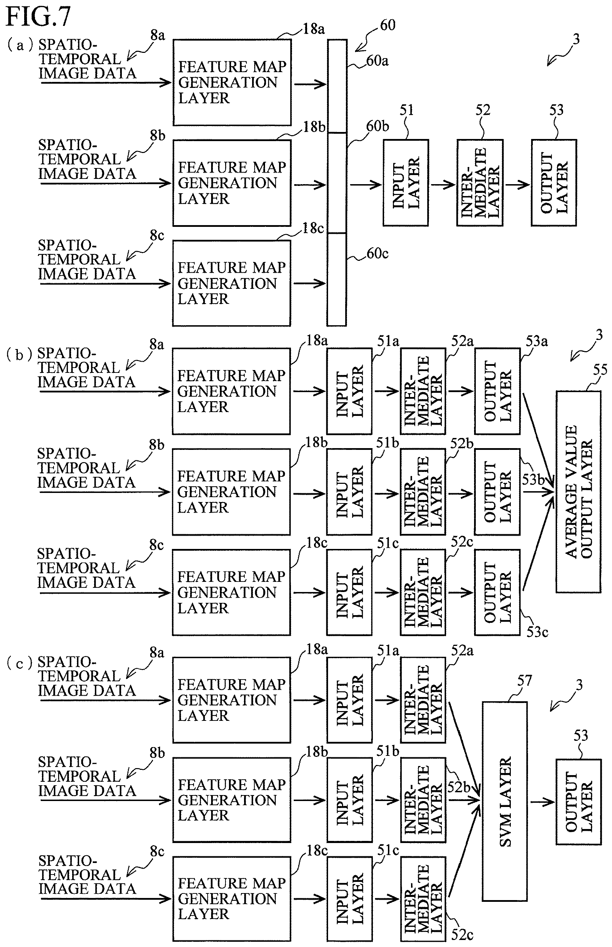

FIG. 7(a) is a diagram illustrating a network structure of the fully coupling method.

The image recognition unit 3 includes feature map generation layers 18a, 18b, and 18c for each of the spatio-temporal image data 8a, 8b, and 8c, and each of them receives the spatio-temporal image data 8a, 8b, and 8c from the spatio-temporal image data generation units 2a, 2b, and 2c and generates the two-dimensional feature maps 60a, 60b, and 60c.

The image recognition unit 3 includes an image data acquiring means for acquiring a plurality of image data with different scanning paths and a feature amount acquiring means for individually acquiring a feature amount of a recognition object from the plurality of image data by the convolution process.

When the image recognition unit 3 generates the two-dimensional feature maps 60a, 60b, and 60c, it vectorizes them (that is, arranges components in one column) and fully couples (connects) them for integration and generates one two-dimensional feature map 60 and inputs it to the input layer 51.

The intermediate layer 52 analyzes the integrated two-dimensional feature map 60 by the neural network, and the output layer 53 outputs the image recognition result obtained by the analysis.

As described above, the image recognition unit 3 includes the integration means for integrating the individual feature amounts by the two-dimensional feature maps 60a, 60b, and 60c and outputting the recognition result of the recognition object.

FIG. 7(b) is a diagram illustrating the network structure of the class score average method.

The image recognition unit 3 includes the feature map generation layer 18a to the output layer 53a, the feature map generation layer 18b to the output layer 53b, and the feature map generation layer 18c to the output layer 53c for each of the spatio-temporal image data 8a, 8b, and 8c, and first, the image recognition result for each of the spatio-temporal image data 8a, 8b, and 8c is calculated.

The image recognition unit 3 further includes an average value output layer 55, averages the image recognition results output by the output layers 53a, 53b, and 53c for each classification class and outputs the image recognition results.

As described above, an average value output layer 55 integrates the image recognition results by the spatio-temporal image data 8a, 8b, and 8c by an averaging process and has the obtained average value as the final image recognition result.

FIG. 7(c) is a diagram illustrating the network structure of the SVM method.

The image recognition unit 3 includes the feature map generation layer 18a to the intermediate layer 52a, the feature map generation layer 18b to the intermediate layer 52b, and the feature map generation layer 18c to the intermediate layer 52c for each of the spatio-temporal image data 8a, 8b, and 8c.

Further, the image recognition unit 3 includes an SVM layer 57 connected to output units of the intermediate layers 52a, 52b, and 52c.

The SVM layer 57 is a layer for performing recognition by SVM (Support Vector Machine). The SVM is widely used as an identifier.

The SVM layer 57 is configured such that the spatio-temporal image data 8a, 8b, and 8c are integrated by coupling and input, and the SVM layer 57 identifies the recognition object by using it. The output layer 53 outputs the identification result for each classification class.

The inventor of this application made a comparison evaluation for the above-mentioned three types of integration methods. As a result, an average correct answer rate was the fully coupling method -> 88.9%, the class score average method -> 85.8%, and the SVM method -> 86.3%, and the correct answer rate of the fully coupling method was the highest. These are almost equal to the CNN 30 using the three-dimensional filter.

The correct answer rate when the single spatio-temporal image data 8 illustrated in FIG. 6 is used was 83.6%, and any of the integration methods has a correct answer rate higher than this.

By means of the experiments above, it was found that the image recognition capability is improved by using a plurality of the scanning paths at the same time.

In this embodiment, the image recognition unit 3 performs image recognition by the CNN 30 as an example, but this is not to limit the image recognition method, but an image recognition method using other feature amounts such as a HOG (Histogram of Oriented Gradients) feature amount, a CoHOG (Co-occurrence HOG) feature amount or a MR-CoHOG (Multi Resolution CoHOG) feature amount can be also employed.

FIG. 8 is a diagram illustrating an example of a hardware configuration of the spatio-temporal image recognition device 1.

The spatio-temporal image recognition device 1 is configured to be onboard but can be mounted on other forms of a movable body such as an aircraft, a ship and the like, mounted on a mobile terminal such as a smartphone or moreover, can be mounted on a standalone type device such as a personal computer.

The spatio-temporal image recognition device 1 is configured by connecting a CPU 41, a ROM 42, a RAM 43, a storage device 44, a camera 45, an input unit 46, an output unit 47, and the like to one another through a bus line.

The CPU 41 is a central processing unit and operates in accordance with a spatio-temporal image recognition program stored in the storage device 44 to execute the above-described pedestrian image recognition.

The ROM 42 is a read-only memory and stores a basic program and parameters for operating the CPU 41.

The RAM 43 is a readable / writable memory and provides a working memory at the time when the CPU 41 generates the spatio-temporal image data 8 from the moving-image data 4 and further image-recognizes a pedestrian from the spatio-temporal image data 8.

The storage device 44 is configured using a large-capacity recording media, such as a hard disk, and to store the spatio-temporal image recognition program.

The spatio-temporal image recognition program is a program that causes the CPU 41 to function as the spatio-temporal image data generation unit 2 and the image recognition unit 3.

The camera 45 is an in-vehicle camera for capturing moving images outside the vehicle, and outputs the frame image data 6 at a predetermined frame rate.

The input unit 46 is composed by including operation buttons and the like for operating the spatio-temporal image recognition device 1, and the output unit 47 is composed by including a display and the like for displaying a setting screen of the spatio-temporal image recognition device 1.

In the embodiment, although the spatio-temporal image recognition device 1 is an in-vehicle device, it can also be configured so that the camera 45 may be installed in the vehicle, the moving image may be transmitted to a server through a network communication, and the image-recognition may be executed in the server and a recognition result thereof may be transmitted to the vehicle.

The spatio-temporal image data generation unit 2 may be mounted on a vehicle, the image recognition unit 3 may be realized by a server, and the spatio-temporal image data generation unit 2 and the image recognition unit 3 may be configurated to be connected to each other by communication.

An operation of the spatio-temporal image recognition device 1 will be described. Here, the case of the fully coupling method will be described.

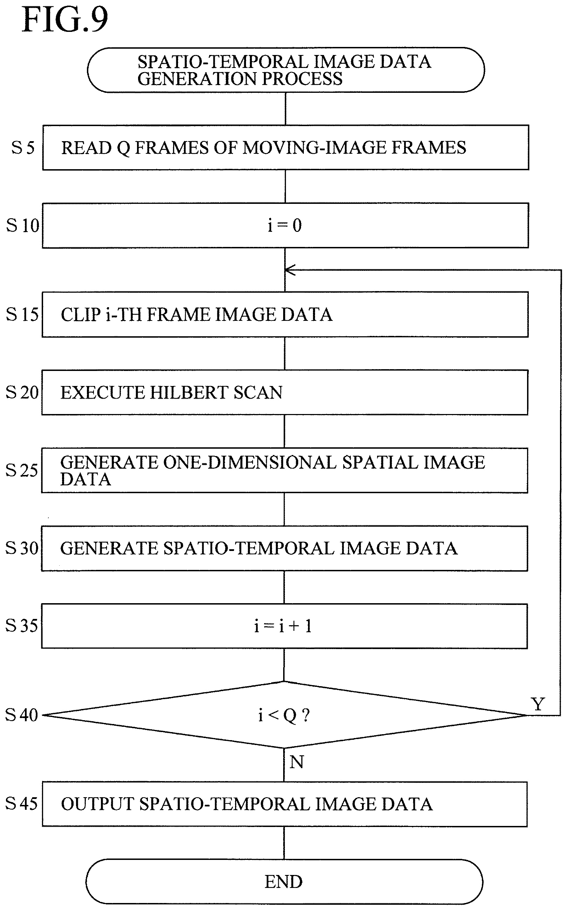

FIG. 9 is a flow chart for describing the generation process procedure of the spatio-temporal image data 8 executed by the spatio-temporal image data generation unit 2a.

The following processing is executed by the spatio-temporal image data generation unit 2a configured by the CPU 41 in accordance with the spatio-temporal image recognition program.

First, the camera 45 captures the outside of the vehicle and sequentially outputs the moving-image data 4.

Next, the CPU 41 reads Q frames of moving image frames (Step 5). More specifically, the CPU 41 reads a predetermined number Q (e.g., six frames) of the frame image data 6 in the moving-image data 4 to be output into the RAM 43 in the order of output.

Next, the CPU 41 sets a parameter i to 0, and stores the set parameter in the RAM 43 (Step 10).

Then, the CPU 41 reads i-th frame image data 6 from the RAM 43, generates a clipping image 6ij therefrom, and stores the generated clipping image 6ij in the RAM 43 (Step 15) .
The region for generating the clipping image 6ij from the frame image data 6 is determined at random on the basis of a random number which is generated.

Note that the i=0th frame image data 6 correspond to the first of the Q frames. That is, the i-th frame image data 6 correspond to the i+first frame of the Q frames.

Next, the CPU 41 restores the size by padding the clipping image 6ij and stores it in the RAM 43.

Then, the CPU 41 sets the Hilbert curve to the aforementioned clipping image 6ij stored in the RAM 43, executes the Hilbert scan (Step 20), and generates the one-dimensional spatial image data 7 (Step 25).

Next, the CPU 41 stores the generated one-dimensional spatial image data 7 in the RAM 43 and generates the spatio-temporal image data 8 (Step 30).

It is noted that: when i=0, the first one-dimensional spatial image data 7a1 is firstly stored in the RAM 43; and when i=1, 2, it is added to the one-dimensional spatial image data 7a1 already stored in the RAM 43 in time series.

Next, the CPU 41 determines whether i is less than Q (Step 40), after incrementing i stored in the RAM 43 by 1 (Step 35).

If i is less than Q (Step 40; Y), the CPU 41 returns to Step 15, and executes the same process to the next frame image data 6.

On the other hand, if i is not less than Q (Step 40; N), since the spatio-temporal image data 8a are completed in the RAM 43, the CPU 41 outputs the spatio-temporal image data 8a to the image recognition unit 3 (Step 45) and ends the process.

The operation of the spatio-temporal image data generation unit 2a has been described, and the spatio-temporal image data generation units 2b and 2c also execute the similar process in parallel and output the spatio-temporal image data 8b and 8c to the image recognition unit 3.

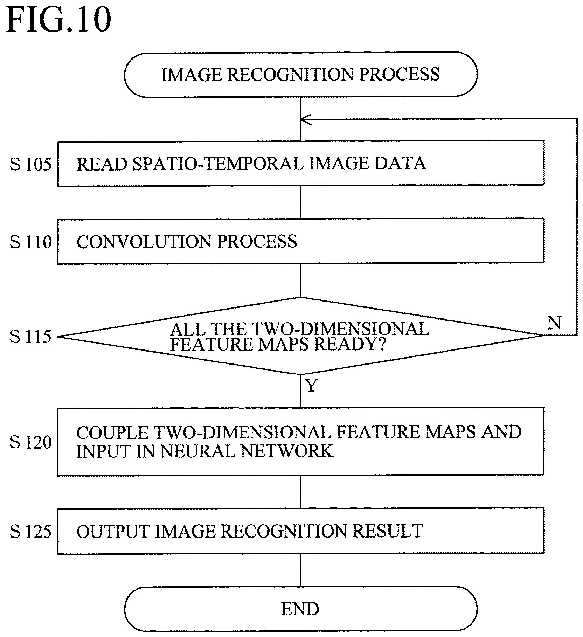

FIG. 10 is a flow chart for describing a procedure of the image recognition process executed by the image recognition unit 3.

The following processing is executed by the image recognition unit 3 configured by the CPU 41 in accordance with the spatio-temporal image recognition program. A function unit corresponding to the process of the CPU 41 is illustrated in parentheses.

The CPU 41 (feature map generation layer 18a) reads the spatio-temporal image data 8a output by the spatio-temporal image data generation unit 2a from the RAM 43 (Step 105) .

Next, the CPU 41 (feature map generation layer 18a) executes the convolution process to the read spatio-temporal image data 8a and generates the two-dimensional feature map 60a and stores it in the RAM 43 (Step 110).

The CPU 41 (feature map generation layers 18b and 18c) execute the similar process also to the spatio-temporal image data 8b and 8c and generate the two-dimensional feature maps 60b and 60c and store them in the RAM 43.

Next, the CPU 41 determines whether all the two-dimensional feature maps 60a, 60b, and 60c are ready in the RAM 43 and if any of the two-dimensional feature maps 60 has not been generated (Step 115; N), the routine returns to Step 105.

On the other hand, if all the two-dimensional feature maps 60a, 60b, and 60c are ready (Step 115; Y), the CPU 41 (fully coupling layer 17) reads them out of the RAM 43 and couples them into one two-dimensional feature map 60 and inputs it to the neural network composed of the input layer 51 to the output layer 53 (Step 120).

Next, the CPU 41 (output layer 53) outputs the image recognition result to a predetermined output destination (Step 125).

The output destination is a control system of a vehicle, for example, and if there is a pedestrian in front of the vehicle, it performs braking of a vehicle speed or the like.

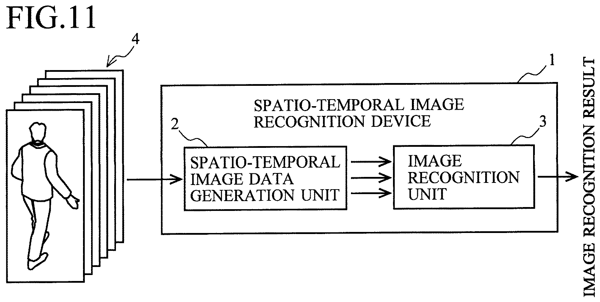

FIG. 11 is a diagram for describing a modified example of the embodiment.

In the aforementioned embodiment, the spatio-temporal image data generation units 2a, 2b, and 2c are provided for each of the scanning paths in the spatio-temporal image recognition device 1, but in this modified example, the single spatio-temporal image data generation unit 2 generates the spatio-temporal image data 8a, 8b, and 8c by executing the Hilbert scan of the frame image data 6 three times on the different scanning paths and outputs them to the image recognition unit 3.

The spatio-temporal image data generation unit 2 sequentially executes the Hilbert scan on the different scanning paths to the frame image data 6.

In this example, the data value acquiring means, the image data generation means, and the output means sequentially execute processes for each of the different scanning paths.

The spatio-temporal image recognition device 1 of the embodiment has a feature that the processing speed is high since a plurality of the spatio-temporal image data generation units 2 is provided for parallel processing, while it needs more hardware resources, and the spatio-temporal image recognition device 1 of the modified example has a feature that, though the processing speed is slow due to sequential processing, a demand for the hardware resource is small.

Which one to select can be determined in accordance with an architecture or a use purpose of a computer on which the spatio-temporal image recognition device 1 is mounted.

The following effects can be obtained by the embodiment and the modified example described above.
(1) The spatial information and the temporal information included in the moving-image data can be expressed by the two-dimensional spatio-temporal image data.
(2) By applying a plurality of the scanning methods to the moving-image data 4 (time series image), a plurality of the spatio-temporal image data can be generated from the same moving-image data 4.
(3) A feature amount can be extracted individually from a plurality of the spatio-temporal image data.
(4) A correct answer rate can be improved by integrating the feature amounts individually extracted from the plurality of spatio-temporal image data and image-recognizing that.

### REFERENCE SIGNS LIST

- 1: Spatio-temporal image recognition device
- 2: Spatio-temporal image data generation unit
- 3: Image recognition unit
- 4: Moving-image data
- 6: Frame image data
- 6ij: Clipping image
- 7: One-dimensional spatial image data
- 8: Spatio-temporal image data
- 11, 13, 15: Convolution layer
- 12, 14, 16: Pooling layer
- 17: Fully coupling layer
- 18: Feature map generation layer
- 20, 24: Image data
- 21, 25: Hilbert curve
- 22, 26: One-dimensional spatial image data
- 27, 28: Region
- 30: CNN
- 41: CPU
- 42: ROM
- 43: RAM
- 44: Storage device
- 45: Camera
- 46: Input unit
- 47: Output unit
- 51: Input layer
- 52: Intermediate layer
- 53: Output layer
- 55: Average value output layer
- 57: SVM layer
- 60: Two-dimensional feature map

## Claims

1. An image data generation device comprising:
a time series spatial information acquiring means for acquiring time series spatial information in which a position of a recognition object in space is recorded in accordance with a lapse of time;
a data value acquiring means for scanning the acquired time series spatial information on different scanning paths in a predetermined direction a plurality of number of times to acquire a column of data values for each of the scanning paths in the aforementioned predetermined direction;
an image data generation means for generating image data for each of the scanning paths in which the acquired column of the data values is arranged correspondingly to the other direction of the time series spatial information; and
an output means for outputting the generated image data.

2. The image data generation device according to claim 1, wherein the predetermined direction is a spatial direction of the time series spatial information, and the other direction is a temporal direction of the time series spatial information.

3. The image data generation device according to claim 1 or 2, wherein the data value acquiring means, the image data generation means, and the output means are provided for each of the different scanning paths, and these means execute the time series spatial information for each of the different scanning paths in parallel processing.

4. The image data generation device according to claim 1 or 2, wherein
the data value acquiring means, the image data generation means, and the output means execute each of the different scanning paths in sequential processing.

5. An image recognition device comprising:
an image data acquiring means for acquiring a plurality of image data with different scanning paths from the image data generation device according to any one of claims 1 to 4;
a feature amount acquiring means for individually acquiring a feature amount of a recognition object from the acquired plurality of image data; and
an integration means for integrating the acquired individual feature amounts and outputting a recognition result of the recognition object.

6. The image recognition device according to claim 5, wherein the feature amount acquiring means acquires the feature amounts by convolution process; and
the integration means integrates the feature amounts by using a neural network.

7. An image data generation program for causing a computer to realize;
a time series spatial information acquiring function for acquiring time series spatial information in which a position of a recognition object in space is recorded in accordance with a lapse of time;
a data value acquiring function for scanning the acquired time series spatial information on different scanning paths in a predetermined direction a plurality of number of times to acquire a column of data values for each of the scanning paths in the aforementioned predetermined direction;
an image data generation function for generating image data for each of the scanning paths in which the acquired column of the data values is arranged correspondingly to the other direction of the time series spatial information; and
an output function for outputting the generated image data.

8. An image recognition program for causing a computer to realize:
an image data acquiring function for acquiring a plurality of image data with different scanning paths from the image data generation device according to any one of claims 1 to 4;
a feature amount acquiring function for individually acquiring a feature amount of a recognition object from the acquired plurality of image data; and
an integration function for integrating the acquired individual feature amounts and outputting a recognition result of the recognition object.
